# EUROPEAN PATENT SPECIFICATION

(11) **EP 3 947 039 B1**
(45) Date of publication and mention of the grant of the patent: **29.03.2023**
(21) Application number: 19723223.4
(22) Date of filing: 04.04.2019
(51) Int. Cl.: B60Q 1/14, H01H 19/635

(54) **ROTARY SWITCH ASSEMBLY. IN PARTICULAR OF A STEERING WHEEL COLUMN INTEGRATED MODULE OF AN AUTOMOTIVE VEHICLE**
DREHSCHALTERANORDNUNG, INSBESONDERE EINES LENKRADSÄULENMODULS EINES KRAFTFAHRZEUGES
ENSEMBLE COMMUTATEUR ROTATIF, EN PARTICULIER D'UN MODULE INTÉGRÉ DE COLONNE DE VOLANT DE DIRECTION D'UN VÉHICULE AUTOMOBILE

(43) Date of publication of application: 09.02.2022
(73) Proprietor: Merit Poland Spólka Z Ograniczona Odpowiedzialnoscia, 30-394 Kraków (PL)
(72) Inventor: MODLINSKI, Boguslaw, 30-348 Kraków (PL); GOLUCH, Jacek, 32-050 Skawina (PL); KOWAL, Andrzej, 30-383 Kraków (PL)
(74) Representative: Lukaszyk, Szymon
(86) International application number: PCT/PL2019/000025
(87) International publication number: WO 2020/204734

(56) References cited:
- EP-A2- 1 406 277
- EP-A2- 2 100 770
- JP-A- 2008 021 552
- US-A1- 2012 292 173

## Description

The present invention relates to a rotary switch assembly, in particular of a steering wheel column integrated module of an automotive vehicle, comprising a support member, a control ring held rotationally by said support member, a slider disposed slidably along the axis of rotation of said control ring and cooperating with an activating member to generate electrical signals, wherein angular displacement of said control ring is converted into axial displacement of said slider.

### Background of the invention

Rotary switches of this kind are frequently employed in steering wheel column integrated modules (CIM) in an automotive industry for controlling various components and subsystems of a vehicle including lights, windscreen wipers and washer, cruise control, audio system, etc. They usually form compact, preassembled units that at the vehicle assembly line are mechanically fixed to the steering wheel column and electrically connected to the vehicle wiring. Commonly the activating functionality is implemented using force-sensing resistive foils, conductive contact switches, electric signal devices of a capacitive nature, light gates, magnet and hall sensor, etc.

It is frequently desirable to provide a user, rotating the control element, with a haptic response, so s/he would know if a desired predefined effect of the component controlled by the switch has indeed been effected, with desired efficiency and without any other response of the system, such as control light being activated, etc. It is known to implement the haptic functionality by means of spring plungers acting on a curved cams.

Patent publication DE19939090 discloses a CIM having a rod attached near the steering column, and a holder fixed near the front end of the rod which has a bored elongated hole. An oblique hole is bored in a cam member coupled with a control element rotatably held by the holder. As an overlapped portion between the elongated hole and the oblique hole varies, an actuating portion of a receiver is moved correspondingly along the elongate holed changing the resistance value of a sliding type variable resistor. It is thus possible to carry out on/off control, speed control and so on of the vehicle-mounted electric components, e.g., front wipers. Publications JP2008004359, JP2007273155 and EP1702796 disclose similar CIMs in which oblique cams are employed in order to convert rotational movement of a control element into a sliding movement of an actuating portion.

Publication EP 1 406 277 A2 discloses a rotary switch device with a wave-shaped guide portion arranged in a knob, and contact holders arranged so that they can be individually, linearly moved together with movable contacts by protrusions moved in a guide portion according to the rotation of the knob. Due to the foregoing, a different state of connection of the movable contacts with the fixed contacts is successively realized by a linear reciprocating motion of the plurality of individual contact holders according to the rotation of the knob.

It has been the object of the present invention to provide a rotary switch that would provide recognition of direction of rotation, as well as discrete change of the parameter controlled by the switch assembly with fittingly perceivable haptic response indicating if such a change has been effected. It has been the further object of the present invention to provide a rotary switch with no angular limits of rotations, that would be compact, cost efficient and simple to manufacture and assembly in particular as a subcomponent of a steering wheel column integrated module.

### Summary of the invention

The invention provides a rotary switch assembly of the kind mentioned in the outset, that is characterised in that said slider is provided with means for restoring the slider equilibrium position along said axis of rotation, said control ring is provided with a number of substantially equiangularly disposed radial protrusions, said slider is provided with a radial protrusion that extends in an area of a circumference defined by said radial protrusions of said control ring, remains between two adjoining radial protrusions of said control ring when said slider is in the equilibrium position, and cooperates with said radial protrusions of said control ring, wherein said radial protrusion of said slider or said radial protrusions of said control ring has/have a form of a cam having two angularly external surfaces slanted at the same orientation with respect to said axis of rotation such that an angular displacement of said control ring is converted into an axial displacement of said slider.

Thanks to that, the slider displacement direction corresponds to the direction of rotation of the control ring. Furthermore displacement range of the slider is limited, which contributes to a compact construction of the rotary switch assembly. Preferably the angular width of projection of said protrusion of said slider on the plane perpendicular to said axis of rotation is lower than the angular width between the adjoining protrusions of said control ring.

Thanks to that the slider returns to its equilibrium position after a radial protrusion of the control ring that pushed the radial protrusion of the slider has moved to the other side of the latter.

Preferably the rotary switch assembly comprises at least one spring plunger disposed substantially parallelly to said axis of rotation and cooperating with an annular haptic surface of said control ring that varies equiangularly along said axis of rotation.

The annular haptic surface reduces a so called *free play* haptic effect between loose elements and enables to predefine a required haptic response.

The term "spring plunger" as used in the context of the present invention denotes any element or assembly capable of exerting an axial force along the line of its disposition in order to extend its length, even if no helical spring is used to this end. In such a case, said haptic surface preferably provided with a number of axial projections and recessions in between them, wherein said projections axially coincide with said radial protrusions of said control ring, and preferably varies substantially triangularly along said axis of rotation.

Thanks to that the haptic response of the control ring is better correlated with displacements of the slider.

Preferably said external surfaces of said cam are slanted at the same angle that amounts about 45°.

### AMENDED SHEET

Thanks to that the ratio of the slider displacements in dependence of rotations of the control ring is the same for both directions of rotations.

Preferably said means for restoring the slider equilibrium position along said axis of rotation comprise at least one spring plunger disposed substantially perpendicularly to said axis of rotation and cooperating with a surface provided with an equilibrium recession in which the elastic energy of the plunger is locally minimal.

This is a particularly simple and compact construction for maintaining the slider equilibrium position. Alternatively a spring or other elastic element attached to the slider could be employed.

Preferably said slider is guided by said support.

This facilitates delivering the switch assembly as a compact, preassembled unit.

Preferably the rotary switch assembly according to the present invention has a form of a column integrated module of an automotive vehicle.

CIMs enable a particularly convenient access to the rotary switch assembly.

Preferably said control ring is available for a user at the entire circumference thereof and has no reference direction.

Therefore the control ring always remains in an equilibrium rest position and user may freely rotate it from any angular direction and with no angular end stops.

Preferably said radial protrusions of said control ring are disposed radially inwardly and said radial protrusion of said slider is disposed radially outwardly.

This contributes to a compact construction of the rotary switch assembly.

### Brief description of drawings

The invention shall be described and explained below in connection with the attached drawings in which:
Fig. 1 is a schematic perspective, exploded view of an embodiment of a rotary switch assembly according to the present invention in a steering wheel column integrated module;
Fig. 2 is a schematic perspective, exploded view of an embodiment of a rotary switch assembly;
Fig. 3 illustrates an embodiment of an electrical connection of the rotary switch assembly;
Fig. 4 is a schematic perspective, exploded view of the assembled rotary switch shown in Fig. 2 along with an enlarged fragment thereof (Fig. 4a) and its cross-sectional view (Fig. 4b);
Fig. 5 is a schematic cross-sectional of another embodiment of the rotary switch assembly according to the present invention along with an enlarged fragment thereof (Fig. 5a);
Fig. 6 is a schematic cross-sectional view illustrating functionality of the rotary switch assembly according to the present invention during right-hand rotation; and
Fig. 7 is a schematic cross-sectional view illustrating functionality of the rotary switch assembly according to the present invention during left-hand rotation.

### Detailed description of preferred embodiments

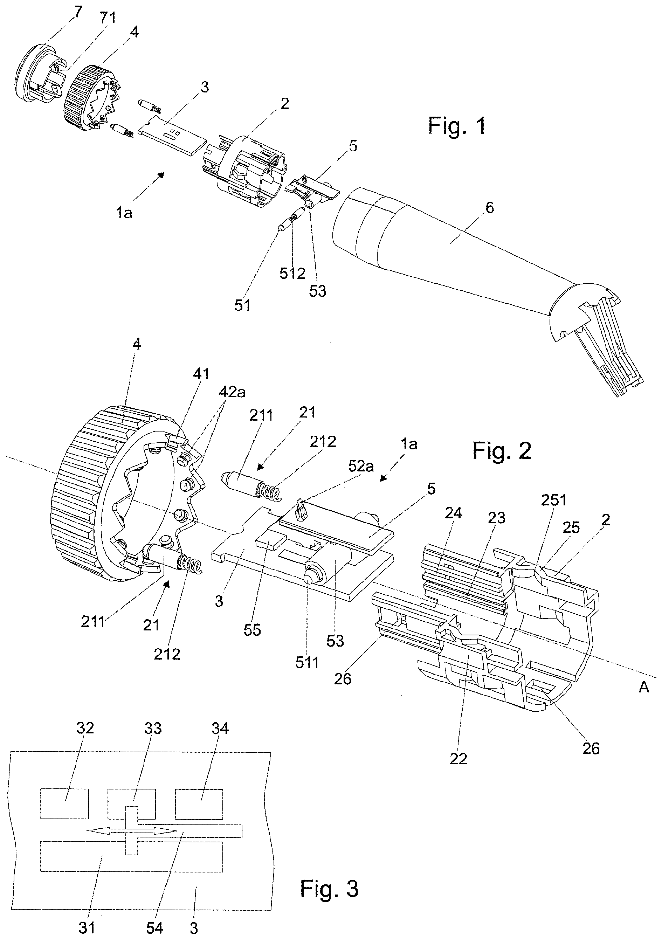

As shown in Fig. 1, the embodiment of a rotary switch assembly 1a comprises a support member 2, an activating member 3, a control ring 4 and a slider 5. In this embodiment the control ring 4 is disposed rotationally within the support member 2, the activating member 3 has a form of a printed circuit board and is disposed within the support member 2, the slider 5 is disposed slidably, along the axis of rotation of the control ring 4, within the support member 2 and cooperates with the control ring 4 and the activating member 3, as shall be described below, to generate electrical signals. The whole switch assembly 1a is snap-locked to a lever 6 and at the end snap-locked with a cap 7, by means of snap-locking latches 26 and 71, forming a compact, preassembled steering wheel column integrated module of an automotive vehicle (not shown) that may be at the vehicle assembly line mechanically fixed to the steering wheel column and electrically connected to the vehicle wiring not shown in the drawing in a manner well known to those skilled in the art. Turning the control ring 4 may be employed for controlling various components and subsystems of the vehicle such as windscreen wipers frequency, cruise control speed, audio system etc. On the other hand the inclinations of the lever 6 may be employed for turning the wipers or cruise control on and off, etc.

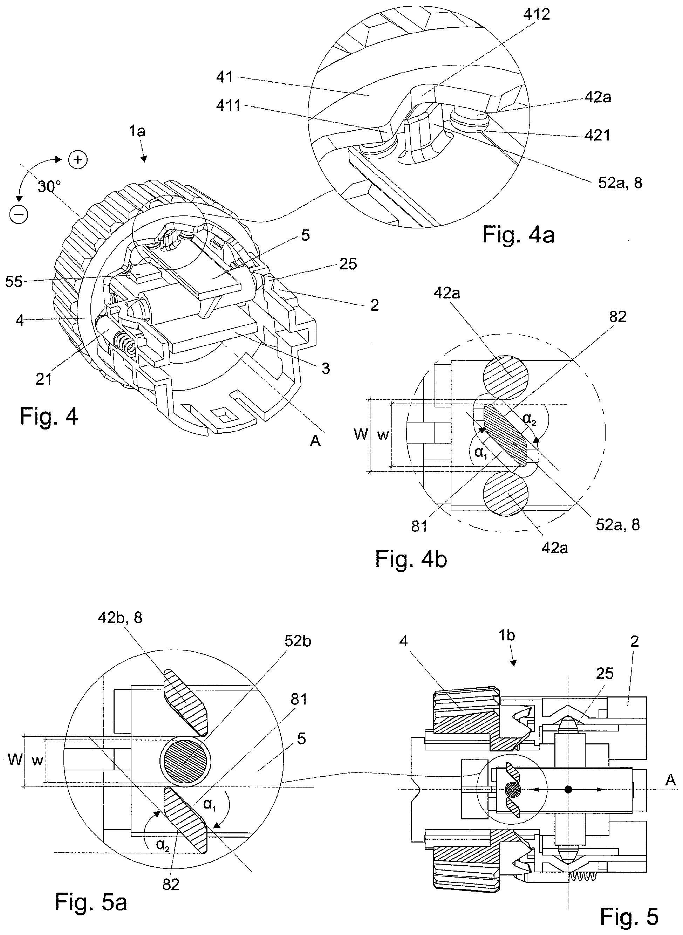

As shown in Fig. 2 and Fig. 4 the control ring 4 is available to be turned by a user at the entire circumference thereof and may freely rotate over the support member 2 with no particular reference direction or resting position. The control ring 4 has an annular haptic surface 41 that varies triangularly along the axial direction with twelve axial projections 411 and twelve recessions 412 in between them. Haptic surface 41 cooperates with two spring plungers 21 disposed coplanarly with the axis A of rotation of the control ring 4 in two sockets 22 of the support member 2. Each spring plunger 21 comprises an engaging cap 211 encompassing a spring 212 with a spherical tip pressing against the haptic surface 41. Such a construction provides a perceivable haptic response to a user rotating the control ring 4 which will tend to maintain its angular positions in which the engaging caps 211 of the spring plungers 21 remain in the recessions 412, ensuring locally minimum elastic energy of the springs 212. Therefore for N projections 411, user must rotate the control ring 4 against the forces of the springs 212 slightly more than by *π*/*N* in order to move the engaging caps 211 over the projections 411 and make them contribute to further rotation of the control ring 4 unless the engaging caps 211 settle in the adjoining recessions 412. In the presented embodiment of twelve projections 411, rotation of more than 15° is required and the corresponding angular step of the control ring 4 amounts 30°. Obviously in other embodiments of the haptic surface 41 the number of projections 411 and recessions 412 could be different and the shape of the haptic surface 41 could be obviously sinusoidal, oval or even asymmetrical w/r/t direction of rotation of the ring, providing that the pattern of the haptic surface 41 is substantially equiangular over the perimeter of the control ring 4. Also in other embodiments of the invention a different number of plungers 21 might be employed to improve the haptic response and said control ring 4 might be activated by an additional gearing wheel accessible to the user.

As shown in Fig. 2 and Fig. 4 the activating member 3 is axially inserted and stabilized in slots 23 of the support member 2. Slider 5 is provided with two guiding rails 55 disposed slidably in slots 24 of the support member 2 located above the slots 23 of the activating member 3. The support member 2 is further provided with two axial self-returning surfaces 25, each having a triangular cross-section in a plane of the slots 24 with an equilibrium recession 251. Each surface 25 cooperates with a spring plunger 51 disposed coplanarly with the slots 24 in a socket 53 of the slider 5, substantially perpendicularly to the axis A. Each spring plunger 51 comprises an engaging cap 511 encompassing a spring 512 (cf. Fig. 1) with a spherical tip pressing against the self-returning surface 25, in order to maintain the equilibrium position of the slider 5 w/r/t the activating member 3. With such a shaping of the surfaces 25, the slider 5 will tend to maintain its equilibrium position in which the engaging caps 511 of the spring plungers 51 remain in the equilibrium recessions 251, ensuring locally minimum elastic energy of the springs 512.

As shown in Fig. 2 and Fig. 4 the control ring 4 is provided at its internal surface with twelve radial protrusions 42a axially coinciding with projections 411 of the haptic surface 41. The protrusions have substantially cylindrical cross-sections and are provided with circumferential rails 421 at their ends. The slider 5 in turn is provided with a radial protrusion 52a that extends between the two adjoining radial protrusions 42a of the control ring 4 in an area of a circumference defined by the radial protrusions 42a. In this embodiment the radial protrusion 52a of the slider 5 has a form of a cam 8 and the radial protrusions 42a of the control ring 4 have a form of actuators. The cam 8 has a substantially rhomboidal cross-section, in a plane which is parallel to the axis A and tangent to a circumference defined by the radial protrusions 42a (i.e. the plane of cross-sections shown in Figs. 4b-7), with rounded edges and two external surfaces 81, 82 at the angular direction slanted with respect to the axial direction respectively and at angles α₁ and α₂ having the same orientation. In this embodiment, angles α₁ and α₂ are substantially the same and amount about 45⁰.

The angular width w of projection of the cam 8 on the plane perpendicular to the axis of rotation of the control ring 4 is slightly lower than the angular width W between the adjoining actuators.

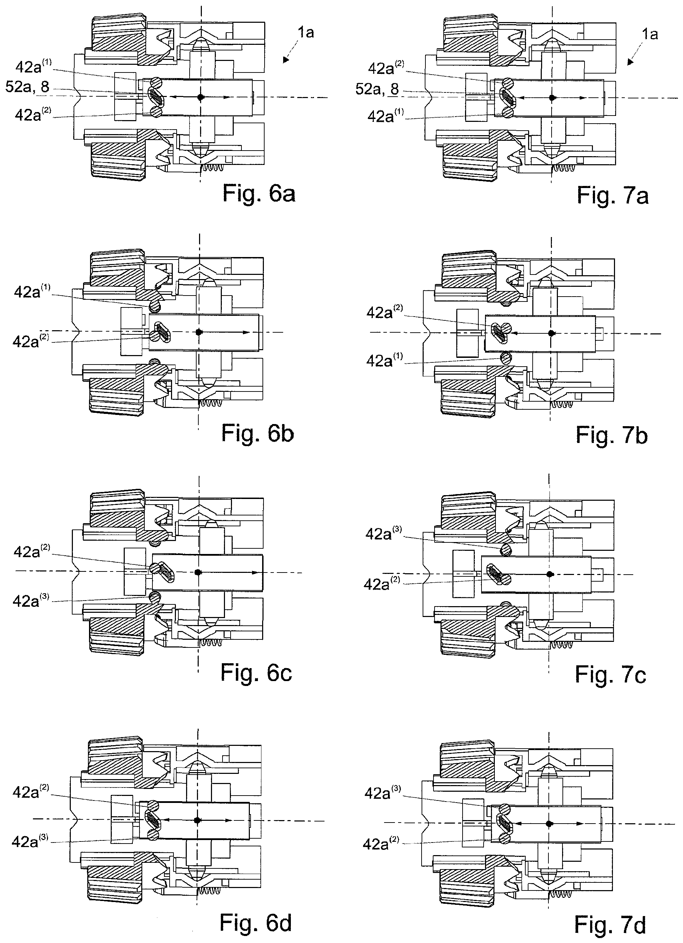

As shown in Fig. 3 in this embodiment the slider has a connecting blade 54 that remains electrically connected with a main conductive path 31 of the activating member 3 regardless of the position of the slider 5. Left turn conductive path 32, neutral conductive path 33, and right turn conductive path 34 adjoin the main conductive path 31 along the direction of the slide of the slider 5, so that in the equilibrium position of the slider 5 the main conductive path 31 and the neutral conductive path 33 remain electrically connected by the connecting blade 54. While the slider 5 deviates from its equilibrium position in either direction, first the connection between paths 31 and 33 breaks and subsequently, after a certain displacement threshold, determined mainly by the shape of the blade 54 and separation between the neutral conductive path 33 and the left turn 32 or right turn 34 conductive path, a new connection between one of these paths 32 or 34 and the main conductive path 31 is established by the connecting blade 54 of the slider 5. In other embodiments of the invention the electrical contact provided by the connecting blade 54 could obviously be replaced by light gate, magnet and hall sensor, etc. In any case rotation of the control element 4 in a particular direction, even if incomplete (cf. Fig. 6b, Fig. 7b), may be used to encode a predefined input transmitted to a given vehicle component controlled by the switch 1.

The functionality of the switch 1a is illustrated in Figs. 6 and 7. As shown in Fig. 6a the protrusion 52a (the cam 8) of the slider 5 rests in an equilibrium position between the protrusion 42a⁽¹⁾ and the protrusion 42a⁽²⁾ of the control ring 4. As shown in Fig. 6b, the protrusion 42a⁽²⁾ (lower w/r/t the plane of the drawing) of the control ring 4 rotated by a user right (upward) acts on the right turn surface 81 of the cam 8 of the slider 5 forcing the slider to move right. This intermediate position may be detected e.g. by a broken connection between the main conductive path 31 and the neutral conductive path 33 (cf. Fig. 3). Yet in this position the control ring 4, if released, will return to its equilibrium position shown in Fig. 6a. Only after crossing a threshold angular position shown in Fig. 6c will it assume a subsequent equilibrium position between the protrusions 42a⁽²⁾ and 42a⁽³⁾ shown in Fig. 6d. Achieving this threshold position may obviously be detected e.g. by establishing connection between the main conductive path 31 and the right turn conductive path 34. Left-hand rotation of the switch assembly 1a shown in Fig. 7 is analogous.

Fig. 5 illustrate another embodiment of the rotary switch assembly 1b in which radial protrusions 42b of the control ring 4 have forms of cams 8, while the radial protrusion 52b of the slider 5 is substantially cylindrical. As in the previous embodiment, angles α₁ and α₂ define the ratio between displacement of the radial protrusions 42b of the control ring 4 and displacement of the radial protrusion 52b of the slider 5 that a given radial protrusions 42b acts upon with its right or left turn angularly external surface 81 or

The above embodiments of the present invention are therefore merely exemplary. The figures are not necessarily to scale and some features may be exaggerated or minimized. These and other factors however should not be considered as limiting the invention, the intended scope of protection of which is indicated in appended claims.

### List of reference numerals

- 1.: rotary switch assembly (1a, 1b)
- 2.: support member
21. spring plunger
211. engaging cap
212. spring
22. socket
23. slot (of the activating member)
24. slot (of the slider)
25. self-returning surface
251. equilibrium recession
26. snap-locking latch
- 3.: activating member
31. main conductive path
32. left turn conductive path
33. neutral conductive path
34. right turn conductive path
- 4.: control ring
41. annular haptic surface
411. axial projection
412. axial recession
42. radial protrusion (42a, 42b)
421. circumferential rail
- 5.: slider
51. spring plunger
511. engaging cap
512. spring
52. radial protrusion (52a, 52b)
53. socket
54. connecting blade
55. guiding rail
- 6.: lever
- 7.: cap
71. snap-locking latch
- 8: cam
81. right turn angularly external surface
82. left turn angularly external surface

## Claims

1. A rotary switch assembly (1), in particular of a steering wheel column integrated module of an automotive vehicle, comprising a support member (2), a control ring (4) held rotationally by said support member (2), a slider (5) disposed slidably along the axis (A) of rotation of said control ring (4) and cooperating with an activating member (3) to generate electrical signals, wherein an angular displacement of said control ring (4) is converted into an axial displacement of said slider (5),
**characterised in that**
said slider (5) is provided with means (51, 25) for restoring the slider (5) equilibrium position along said axis of rotation (A),
said control ring (4) is provided with a number of substantially equiangularly disposed radial protrusions (42a, 42b),
said slider (5) is provided with a radial protrusion (52a, 52b) that:
extends in an area of a circumference defined by said radial protrusions (42a, 42b) of said control ring (4),
remains between two adjoining radial protrusions (42a, 42b) of said control ring (4) when said slider (5) is in the equilibrium position, and
cooperates with said radial protrusions (42a, 42b) of said control ring (4),
wherein
said radial protrusion (52a) of said slider (5) or said radial protrusions (42b) of said control ring (4) has/have a form of a cam (8) having two angularly external surfaces (81, 82) slanted at the same orientation (α₁, α₂) with respect to said axis of rotation (A) such that an angular displacement of said control ring (4) is converted into an axial displacement of said slider (5).

2. The switch assembly according to Claim 1, **characterized in that**, the angular width (w) of projection of said protrusion (52a, 52b) of said slider (5) on the plane perpendicular to said axis of rotation (A) is lower than the angular width (W) between the adjoining protrusions (42a, 42b) of said control ring (4).

3. The switch assembly according to Claim 1 or 2, **characterized in that**, it comprises at least one spring plunger (21) disposed substantially parallelly to said axis of rotation (A) and cooperating with an annular haptic surface (41) of said control ring (4) that varies equiangularly along said axis of rotation (A).

4. The switch assembly according to Claim 3, **characterized in that**, said haptic surface (41) is provided with a number of axial projections (411) and recessions (412) in between them, wherein said projections (411) axially coincide with said radial protrusions (42a, 42b) of said control ring (4).

5. The switch assembly according to Claim 4, **characterized in that**, said haptic surface (41) varies substantially triangularly along said axis of rotation (A).

6. The switch assembly according to any one of preceding Claims, **characterized in that**, said external surfaces (81, 82) of said cam (8) are slanted at the same angle (α) that amounts about 45°.

7. The switch assembly according to any one of preceding Claims, **characterized in that**, said means (51, 25) for restoring the slider (5) equilibrium position along said axis of rotation (A) comprise at least one spring plunger (51) disposed substantially perpendicularly to said axis of rotation (A) and cooperating with a surface (25) provided with an equilibrium recession (251) in which the elastic energy of the plunger (51) is locally minimal.

8. The switch assembly according to any one of preceding Claims, **characterized in that**, said slider (5) is guided by said support (2).

9. The switch assembly according to any one of preceding Claims, **characterized in that**, it has a form of a column integrated module (1, 6, 7) of an automotive vehicle.

10. The switch assembly according to any one of preceding Claims, **characterized in that**, said control ring (4) is available for a user at the entire circumference thereof and has no reference direction.

11. The switch assembly according to any one of preceding Claims, **characterized in that**, said radial protrusions (42a, 42b) of said control ring (4) are disposed radially inwardly and said radial protrusion (52a, 52b) of said slider (5) is disposed radially outwardly.

## Patentansprüche

1. Ein Drehschalteranordnung (1), insbesondere eines integrierten Lenkradsäulenmoduls eines Kraftfahrzeugs, mit einem Trägerelement (2), einem Steuerring (4), der von dem Trägerelement (2) drehbar gehalten wird, einem Schieber (5), der entlang der Drehachse (A) des Steuerrings (4) verschiebbar angeordnet ist und mit einem Aktivierungselement (3) zusammenwirkt, um elektrische Signale zu erzeugen, wobei eine Winkelverschiebung des Steuerrings (4) in eine axiale Verschiebung des Schiebers (5) umgewandelt wird,
**dadurch gekennzeichnet, dass**
der Schieber (5) mit Mitteln (51, 25) zur Wiederherstellung der Gleichgewichtslage des Schiebers (5) entlang der Drehachse (A) versehen ist,
der Steuerring (4) mit einer Anzahl von im Wesentlichen gleichwinklig angeordneten radialen Vorsprüngen (42a, 42b) versehen ist,
der Schieber (5) mit einem radialen Vorsprung (52a, 52b) versehen ist, der:
sich in einem Bereich des Umfangs erstreckt, der durch die radialen Vorsprünge (42a, 42b) des Steuerrings (4) definiert ist,
zwischen zwei benachbarten radialen Vorsprüngen (42a, 42b) des Steuerrings (4) verbleibt, wenn sich der Schieber (5) in der Gleichgewichtslage befindet, und
mit den radialen Vorsprüngen (42a, 42b) des Steuerrings (4) zusammenwirkt, wobei
der radiale Vorsprung (52a) des Schiebers (5) oder die radialen Vorsprünge (42b) des Steuerrings (4) die Form eines Nockens (8) hat/haben, der zwei winkelmäßig äußere Flächen (81, 82) aufweist, die in derselben Ausrichtung (α₁, α₂) in Bezug auf die Drehachse (A) geneigt sind, so dass eine winkelmäßige Verschiebung des Steuerrings (4) in eine axiale Verschiebung des Schiebers (5) umgewandelt wird.

2. Die Schalteranordnung nach Anspruch 1, **dadurch gekennzeichnet, dass** die Winkelbreite (w) der Projektion des Vorsprungs (52a, 52b) des Schiebers (5) auf die Ebene senkrecht zur Drehachse (A) geringer ist als die Winkelbreite (W) zwischen den benachbarten Vorsprüngen (42a, 42b) des Steuerrings (4).

3. Die Schalteranordnung nach Anspruch 1 oder 2, **dadurch gekennzeichnet, dass** sie mindestens einen Federbolzen (21) aufweist, der im Wesentlichen parallel zur Drehachse (A) angeordnet ist und mit einer ringförmigen haptischen Oberfläche (41) des Steuerrings (4) zusammenwirkt, die sich gleichwinklig zur Drehachse (A) verändert.

4. Die Schalteranordnung nach Anspruch 3, **dadurch gekennzeichnet, dass** die haptische Oberfläche (41) mit einer Anzahl von axialen Vorsprüngen (411) und Vertiefungen (412) dazwischen versehen ist, wobei die Vorsprünge (411) axial mit den radialen Vorsprüngen (42a, 42b) des Steuerrings (4) zusammenfallen.

5. Die Schalteranordnung nach Anspruch 4, **dadurch gekennzeichnet, dass** die haptische Oberfläche (41) entlang der Drehachse (A) im Wesentlichen dreieckig variiert.

6. Die Schalteranordnung nach einem der vorhergehenden Ansprüche, **dadurch gekennzeichnet, dass** die äußeren Flächen (81, 82) des Nockens (8) um denselben Winkel (α) geneigt sind, der etwa 45° beträgt.

7. Die Schalteranordnung nach einem der vorhergehenden Ansprüche, **dadurch gekennzeichnet, dass** die Mittel (51, 25) zur Wiederherstellung der Gleichgewichtslage des Schiebers (5) entlang der Drehachse (A) mindestens einen Bolzen (51) umfassen, der im Wesentlichen senkrecht zur Drehachse (A) angeordnet ist und mit einer Fläche (25) zusammenwirkt, die mit einer Gleichgewichtsaussparung (251) versehen ist, in der die elastische Energie des Bolzens (51) lokal minimal ist.

8. Die Schalteranordnung nach einem der vorhergehenden Ansprüche, **dadurch gekennzeichnet, dass** der Schieber (5) von dem Träger (2) geführt wird.

9. Die Schalteranordnung nach einem der vorhergehenden Ansprüche, **dadurch gekennzeichnet, dass** sie die Form eines säulenintegrierten Moduls (1, 6, 7) eines Kraftfahrzeugs hat.

10. Die Schalteranordnung nach einem der vorhergehenden Ansprüche, **dadurch gekennzeichnet, dass** der Steuerring (4) für einen Benutzer an seinem gesamten Umfang verfügbar ist und keine Bezugsrichtung aufweist.

11. Die Schalteranordnung nach einem der vorhergehenden Ansprüche, **dadurch gekennzeichnet, dass** die radialen Vorsprünge (42a, 42b) des Steuerrings (4) radial nach innen und der radiale Vorsprung (52a, 52b) des Schiebers (5) radial nach außen angeordnet sind.

## Revendications

1. Un ensemble de commutateur rotatif (1), en particulier d'un module intégré de volant de la colonne de direction d'un véhicule automobile, comprenant un élément de support (2), un anneau de commande (4) maintenu en rotation par ledit élément de support (2), un coulisseau (5) disposé de manière coulissante le long de l'axe (A) de rotation dudit anneau de commande (4) et coopérant avec un élément d'activation (3) pour générer des signaux électriques, dans lequel un déplacement angulaire dudit anneau de commande (4) est converti en un déplacement axial dudit coulisseau (5) **caractérisé en ce que**
ledit coulisseau (5) est pourvu de moyens (51, 25) pour rétablir la position d'équilibre du coulisseau (5) le long dudit axe de rotation (A), ledit anneau de commande (4) est pourvue d'un certain nombre de saillies radiales (42a, 42b) disposées de manière sensiblement équiangulaire,
ledit coulisseau (5) est pourvu d'une saillie radiale (52a, 52b) qui:
s'étend dans une zone d'une circonférence définie par lesdites saillies radiales (42a, 42b) dudit anneau de commande (4),
reste entre deux saillies radiales adjacentes (42a, 42b) dudit anneau de commande (4) lorsque ledit coulisseau (5) est dans la position d'équilibre, et
coopère avec lesdites saillies radiales (42a, 42b) dudit anneau de commande (4), dans lequel
ladite saillie radiale (52a) dudit coulisseau (5) ou lesdites saillies radiales (42b) dudit anneau de commande (4) a/ont la forme d'une came (8) ayant deux surfaces angulairement externes (81, 82) inclinées selon la même orientation (α₁, α₂) par rapport audit axe de rotation (A) de sorte qu'un déplacement angulaire dudit anneau de commande (4) est converti en un déplacement axial dudit coulisseau (5).

2. L'ensemble de commutateur selon la revendication 1, **caractérisé en ce que** la largeur angulaire (w) de projection de ladite saillie (52a, 52b) dudit coulisseau (5) sur le plan perpendiculaire audit axe de rotation (A) est inférieure à la largeur angulaire (W) entre les saillies adjacentes (42a, 42b) dudit anneau de commande (4).

3. L'ensemble de commutateur selon la revendication 1 ou 2, **caractérisé en ce qu'**il comprend au moins un piston à ressort (21) disposé sensiblement parallèlement audit axe de rotation (A) et coopérant avec une surface haptique annulaire (41) dudit anneau de commande (4) qui varie de façon équiangulaire le long dudit axe de rotation (A).

4. L'ensemble de commutateur selon la revendication 3, **caractérisé en ce que** ladite surface haptique (41) est munie d'un certain nombre de saillies axiales (411) et d'évidements (412) entre elles, dans lequel lesdites saillies (411) coïncident axialement avec lesdites saillies radiales (42a, 42b) dudit anneau de commande (4).

5. L'ensemble de commutateur selon la revendication 4, **caractérisé en ce que** ladite surface haptique (41) varie sensiblement de façon triangulaire le long dudit axe de rotation (A).

6. L'ensemble de commutateur selon l'une quelconque des revendications précédentes, **caractérisé en ce que** lesdites surfaces externes (81, 82) de ladite came (8) sont inclinées selon le même angle (α) qui est d'environ 45°.

7. L'ensemble de commutateur selon l'une quelconque des revendications précédentes, **caractérisé en ce que** lesdits moyens (51, 25) pour rétablir la position d'équilibre du coulisseau (5) le long dudit axe de rotation (A) comprennent au moins un plongeur à ressort (51) disposé sensiblement perpendiculairement audit axe de rotation (A) et coopérant avec une surface (25) pourvue d'une récession d'équilibre (251) dans laquelle l'énergie élastique du plongeur (51) est localement minimale.

8. L'ensemble de commutateur selon l'une quelconque des revendications précédentes, **caractérisé en ce que** ledit coulisseau (5) est guidé par ledit support (2).

9. L'ensemble de commutateur selon l'une quelconque des revendications précédentes, **caractérisé en ce qu'**il a la forme d'un module intégré à une colonne (1, 6, 7) d'un véhicule automobile.

10. L'ensemble de commutateur selon l'une quelconque des revendications précédentes, **caractérisé en ce que** ledit anneau de commande (4) est disponible pour un utilisateur sur toute sa circonférence et n'a pas de direction de référence.

11. L'ensemble de commutateur selon l'une quelconque des revendications précédentes, **caractérisé en ce que** lesdites saillies radiales (42a, 42b) dudit anneau de commande (4) sont disposées radialement vers l'intérieur et ladite saillie radiale (52a, 52b) dudit coulisseau (5) est disposée radialement vers l'extérieur.
